**Europäisches Patentamt**

**European Patent Office**

**Office européen des brevets**

(19)

(11) Veröffentlichungsnummer : **0 380 714 B1**

(12) **EUROPÄISCHE PATENTSCHRIFT**

(45) Veröffentlichungstag der Patentschrift :
**19.08.92 Patentblatt 92/34**

(51) Int. Cl.$^5$: **A22C 21/00**

(21) Anmeldenummer : **89101487.0**

(22) Anmeldetag : **28.01.89**

(54) **Verfahren zum maschinellen Gewinnen des Fleisches von Geflügelkörpern und Vorrichtung zur Durchführung des Verfahrens.**

(43) Veröffentlichungstag der Anmeldung :
**08.08.90 Patentblatt 90/32**

(45) Bekanntmachung des Hinweises auf die
Patenterteilung :
**19.08.92 Patentblatt 92/34**

(84) Benannte Vertragsstaaten :
**AT BE CH DE ES FR GB IT LI LU NL SE**

(56) Entgegenhaltungen :
**EP-A- 0 118 963**
**EP-A- 0 168 865**
**EP-A- 0 183 986**
**EP-A- 0 207 553**
**US-A- 4 557 017**

(73) Patentinhaber : **NORDISCHER
MASCHINENBAU RUD. BAADER GMBH + CO
KG
Geniner Strasse 249
W-2400 Lübeck (DE)**

(72) Erfinder : **Meyer, Detlef
Arnimstrasse.4b
W-2400 Lübeck (DE)**
Erfinder : **Lindert, Heinrich
Kölkebecker Strasse.62
W-4802 Halle (DE)**
Erfinder : **Schaarschmidt, Theo Martin,
Dipl.-Ing.
Lange Reihe 4
W-2400 Lübeck (DE)**

**Beschreibung**

Die Erfindung betrifft ein Verfahren zum maschinellen Gewinnen des Fleisches von den Körpern geschlachteten Geflügels, wobei die Körper von den Extremitäten befreit vorliegen und der Skelettkörper im wesentlichen das aus Kamm (crista sterni) und corpus sterni bestehende Brustbein (sternum) und die von den Rabenbeinen (coracoidae) getragenen Flügelgelenke mit dem Gabelbein (clavicula), sowie eventuell mindestens Teile der Rippen enthält, und welche Körper mit den Flügelgelenken voraus und in Richtung ihrer Längsachse unter zu der Förderrichtung im wesentlichen paralleler Ausrichtung des der Körperhöhle zugewandten Teils der Brustbeinplatte (corpus sterni) an einer Reihe von Werkzeugen vorbeigeführt werden, sowie eine Vorrichtung zur Durchführung dieses Verfahrens mit einem mit Aufnahmen für die Halterung der zu bearbeitenden Geflügelkörper versehenen, kontinuierlich bewegten Förderer sowie längs der Bahn des Förderers angeordneten Werkzeugen zum Lösen des Fleisches von dem Skelettkörper.

Aus der EP-A1 168 865 ist eine Einrichtung bekannt, welche zwar auf das Entfernen des Kopfteils des Gabelbeins (clavicula) gerichtet ist, welcher Vorgang aber einem Filetierprozeß vorgelagert ist, dessen Ergebnis ein das Brustfleisch in Form eines die Außen- und Innenfilets umfassenden Doppelfilets ist. Bei dieser Einrichtung werden die als Vorderhälften vorliegenden Geflügelkörper auf den Sätteln eines umlaufend angetriebenen Förderers aufgesattelt, so daß das Sattelhorn in die Halsöffnung ragt und das Brustteil nach oben weist.

Das Filetieren des mit der Halsöffnung voraus geförderten Geflügelkörpers erfolgt im Untertrum der Einrichtung und beginnt mit dem Rückhalten des Brustfleisches und damit Abstreifen desselben von dem Gabelbein bis zum Brustbein (sternum) und wird fortgesetzt durch ein Schabewerkzeug, welches der Form des Geflügelkörpers angepaßt ist und durch Eindringen zwischen Skelett und Fleisch das Abtrennen des Fleisches bis an den Kamm des Brustbeins (crista sterni) heran bewirkt. Mittels dann folgender Schabefinger erfolgt das Ablösen von den Flanken des Brustbeins in dessen Übergangsbereich zur Brustbeinplatte (corpus sterni) und schließlich das vollständige Abtrennen des Doppelfilets mittels umlaufend angetriebener Schälgurte.

Ein weiteres Ausführungsbeispiel dieses Standes der Technik sieht als erstes Filetierwerkzeug ein Paar Fräswalzen vor, die das im Bereich der Rippen befindliche Filetfleisch von dem Skelett abheben. Diesem Werkzeug ist ein Schabewerkzeug nach Art des oben beschriebenen nachgeschaltet, das das Abtrennen des Fleisches bis an den Kamm des Brustbeins heran bewirkt. Das vollständige Abtrennen des Doppelfilets übernimmt schließlich wiederum ein Werkzeug aus umlaufend angetriebenen Schälgurten.

Aus der EP-A1 207 553 ist eine weitere Einrichtung zum Gewinnen des Fleisches von Geflügelkörpern in Form von Doppelfilets bekannt. Ausgangsprodukt ist auch hier die Vorderhälfte eines Geflügelkörpers, welcher auf das Sattelhorn eines Sattels gestülpt wird, der Bestandteil eines umlaufenden Förderers ist. Beim Aufstülpen werden die Flügelgelenke und damit die Ansatzpunkte des Gabelbeins nach innen gedrängt gehalten und der Geflügelkörper so den Filetwerkzeugen zugeleitet, die längs des Untertrums des Förderers angeordnet sind und das Filetfleisch im wesentlichen durch Abschieben gewinnen.

Bei der Gewinnung solcher Filets von Geflügelkörpern ist es das Ziel, bei möglichst hoher Ausbeute an Filetfleisch ein optisch ansprechendes Produkt zu erhalten, welcher Eindruck sowohl von dem Konturbild als auch von der Ausführung der Trennfläche bestimmt wird.

Bezüglich dieser Kriterien ist das mit den vorstehend beschriebenen Einrichtungen gewinnbare Produkt verbesserungsbedürftig, welches Ziel zu erreichen Aufgabe der vorliegenden Erfindung ist.

Diese Aufgabe wird je nach dem, ob das zu gewinnende Fleisch als die Innenfilets einstückig mit umschließendes Doppelfilet gewonnen werden soll, oder die Außenfilets als Doppelfilet und die Innenfilets separat anfallen sollen, erfindungsgemäß durch das Verfahren nach Anspruch 1 bzw. dasjenige nach Anspruch 2 gelöst.

Zur Durchführung dieser Verfahren ist eine Vorrichtung geeignet, deren Merkmale aus den übrigen Ansprüchen entnehmbar sind.

Die durch die Erfindung erreichbaren Vorteile bestehen im wesentlichen darin, daß die Strapazierung des Fleisches minimal ist, da die einzelnen Werkzeuge in ihrem Arbeitsfeld so eingeengt sind, daß ihre kompromißlose Anpassung an die jeweiligen anatomischen Gegebenheiten möglich ist. Damit wird eine sichere und schonende Arbeitsweise ermöglicht, die ein ansprechendes Produkt bei hoher Ausbeute ergibt.

Die Erfindung wird anhand von in der Zeichnung dargestellten Ausführungsbeispielen näher erläutert. Es zeigen

Fig. 1 eine vereinfachte Gesamtansicht der erfindungsgemäßen Vorrichtung in axonometrischer Darstellung,

Fig. 2 eine entsprechend Fig. 1 dargestellte Vorrichtung zum Gewinnen eines die Innenfilets einschließenden Doppelfilets,

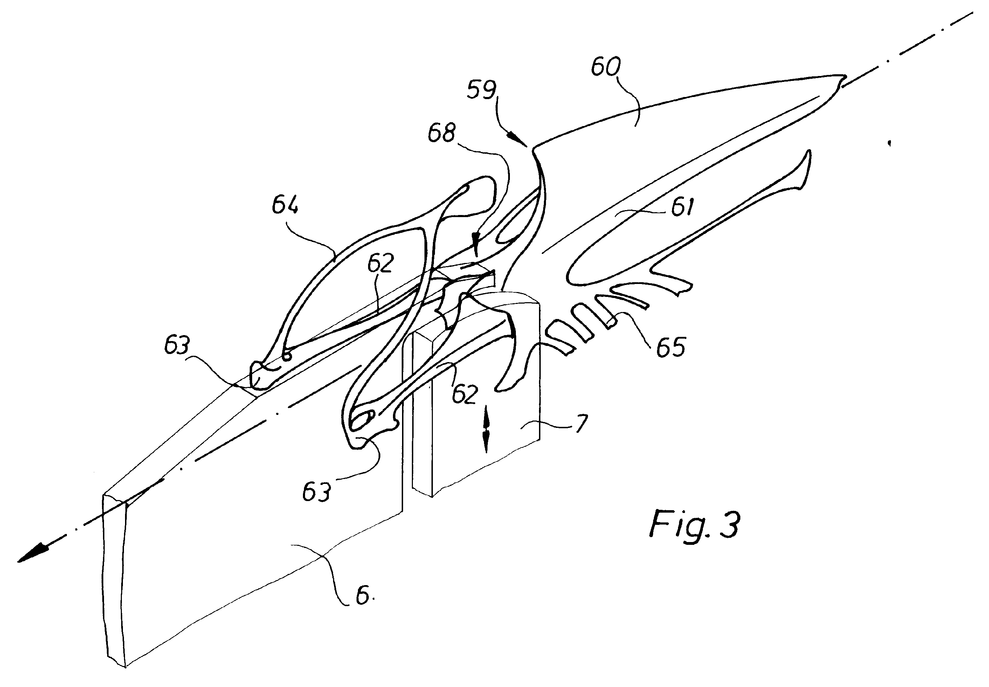

Fig. 3 eine axonometrische Darstellung des Skeletts eines mit Brustkappe bezeichneten Teils eines Geflügelkörpers,

Fig. 4 bis 8 jeweils axonometrische Darstellungen in den einzelnen Bearbeitungsstadien jeweils nach Durchführung der Verfahrensschritte a) bis e) , die jeweils lediglich einseitig ausgeführt wiedergegeben sind.

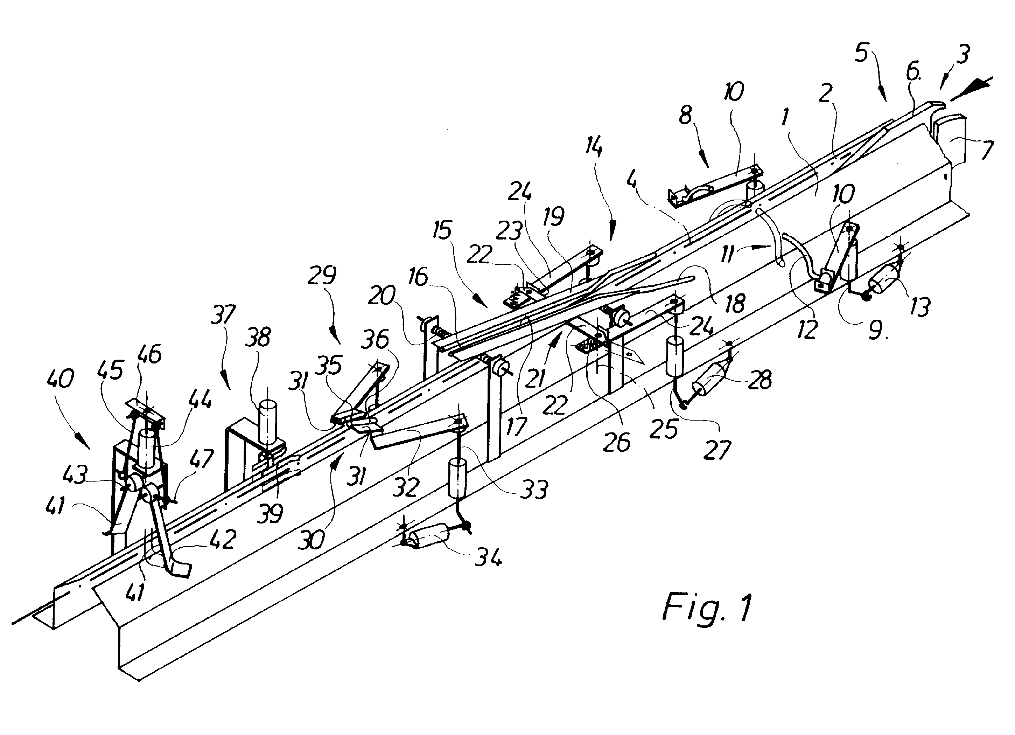

Die erfindungsgemäße Vorrichtung ist auf einem Maschinengestell aufgebaut, das aus Gründen der Übersichtlichkeit lediglich in seinem den Arbeitsbereich umfassenden Teil in Fig. 1 dargestellt ist. Dieser Bereich zeigt ein Paar dachförmig geneigt angeordneter, im Bereich der Firstlinie einen Spalt 2 aufweisender Führungsprofile 1 , die sich symmetrisch zu beiden Seiten der Bahn eines Förderers 3 erstrecken. Dieser umfaßt eine nur in ihrem Obertrum angedeutet dargestellte endlose und in einer senkrechten Umlaufebene auf geeignete Weise umlaufend angetriebene Kette 4 , welche mit Aufnahmen 5 für die Halterung der zu bearbeitenden Geflügelkörper 58 versehen ist. Die Aufnahmen 5 bestehen jeweils aus einem Sattelteil 6, das mit einem Klemmteil 7 eine über nicht gezeigte gestellfeste Kurvenschienen steuerbare Zange bildet, die vor Eintritt der Aufnahmen 5 in den Bereich der Werkzeuge durch Anheben des Klemmteils 7 in Schließstellung gebracht wird. Die Werkzeuge sind jeweils paarig und symmetrisch zu beiden Seiten der Bahn des Förderers 3 angeordnet. Dabei umfaßt das erste Werkzeug 8 auf jeder Seite der Bahn des Förderers 3 einen um eine senkrechte Achse 9 schwenkbaren Hebel 10 , welcher an seinem freien Ende ein Schabewerkzeug 11 bestehend aus einem Schaber 12 in Form eines Schabefingers umfaßt, der in geeigneter, nicht dargestellter Weise gegen Federkraft nach oben ausweichbar gehaltert ist. An jeder Achse 9 greift ein eine Drehung derselben bewirkender Antrieb in Form eines pneumatisch angetriebenen Schwenkzylinders 13 an , der den Schaber 12 zwischen einer Stellung neben der Bahn der Geflügelkörper 58 in eine dieselbe kreuzende elastisch zu schwenken vermag.

Dem Werkzeug 8 folgt ein zweites Werkzeug 14, das auf jeder Seite der Bahn des Förderers 3 ein Führungselement 15 aufweist. Die Führungselemente 15 erstrecken sich unter Belassen eines in Förderrichtung enger werdenden Spaltes 16 und ansteigend dicht nebeneinander und bestehen aus Rundstäben 17 , wobei das gegen die Förderrichtung weisende Ende 18 jeweils nach außen gespreizt ist, so daß jedes Führungselement 15 über der Dachfläche des jeweils zugeordneten Führungsprofils 1 seinen Anfang nimmt. Im Bereich des Spaltes 16 sind die Rundstäbe nach außen hin in Führungsflächen 19 erweitert. Die Halterung der Führungselemente 15 erfolgt so, daß deren Verdrängung nach außen gegen die Kraft von Federn 20 möglich ist. In der die Führungselemente 15 umfassenden Zone der Vorrichtung ist weiter ein Trennwerkzeug 21 mit einem Paar Schälmesser 22 angeordnet. Jedes derselben ist an dem freien Ende eines Hebels 24 angebracht und besteht aus einer Messerklinge, deren Schälkante 23 im wesentlichen quer zu der Förderrichtung und sich in horizontaler Ebene erstreckend ausgerichtet ist. Jedes Schälmesser 22 ist in einer senkrechten Achse 25 gelagert und gegen die Kraft einer Feder 26 in Mitnahmerichtung des Förderers 3 schwenkbar. Der Hebel 24 ist mit seinem anderen Ende an einer senkrechten Achse 27 befestigt, an der ein eine Drehung derselben bewirkender Antrieb in Form eines pneumatisch betriebenen Schwenkzylinders 28 angreift, der die Schälmesser 22 zwischen einer Stellung neben der Bahn der Geflügelkörper 58 in eine dieselbe kreuzende elastisch zu schwenken vermag. In der eingeschwenkten Stellung befinden sich die Schälmesser 22 unmittelbar unterhalb der Führungsflächen 19 der Führungselemente 15 .

Dem Werkzeug 14 ist als drittes Werkzeug 29 eine Rückhalteeinrichtung 30 mit einem Paar Klemmelementen 31 nachgeschaltet. Jedes derselben ist an dem freien Endes eines Hebels 32 angebracht, dessen anderes Ende an einer senkrechten Achse 33 befestigt ist, an der ein eine Drehung derselben bewirkender Antrieb in Form eines pneumatisch betriebenen Schwenkzylinders 34 angreift, der die Klemmelemente 31 zwischen einer die Bahn der Geflügelkörper 58 kreuzenden Grundstellung in eine Stellung neben dieser Bahn zu schwenken vermag. Die Klemmkanten 35 der Klemmelemente 31 sind gegenüber der Bahn der Geflügelkörper 58 und in deren Förderrichtung ansteigend ausgerichtet und bilden in der Grundstellung einen sich in Förderrichtung V-förmig verjüngenden Klemmspalt 36.

Der Rückhalteeinrichtung 30 folgt ein viertes Werkzeug 37 , welches ein Paar durch einen pneumatischen Antrieb 38 von oben in die Bahn der Geflügelkörper 58 einsteuerbarer Reibelemente 39 in Kufenform umfaßt.

Das letzte Werkzeug 40 schließlich umfaßt ein Paar mit ihren Schabekanten 42 der Querschnittskontur des Skelettes des Geflügelkörpers 58 im Bereich des Kamms 60 des Brustbein 59 und der Brustbeinplatte 61 angepaßter Schaber 41 . Diese sind um oberhalb der Bahn der Geflügelkörper 58 angeordnete Achsen 43 scherenartig schwenkbar gelagert und mit Hilfe eines pneumatischen Antriebes 44 in die Bahn der Geflügelkörper 58 einsteuerbar. Dabei erfolgt die Übertragung des Antriebes auf die Schaber 41 über Lenker 45 , die die Verbindung zwischen einem Antriebsjoch 46 und jeweils an den Schabern 41 angeordneten Betätigungshebeln 47 herstellen.

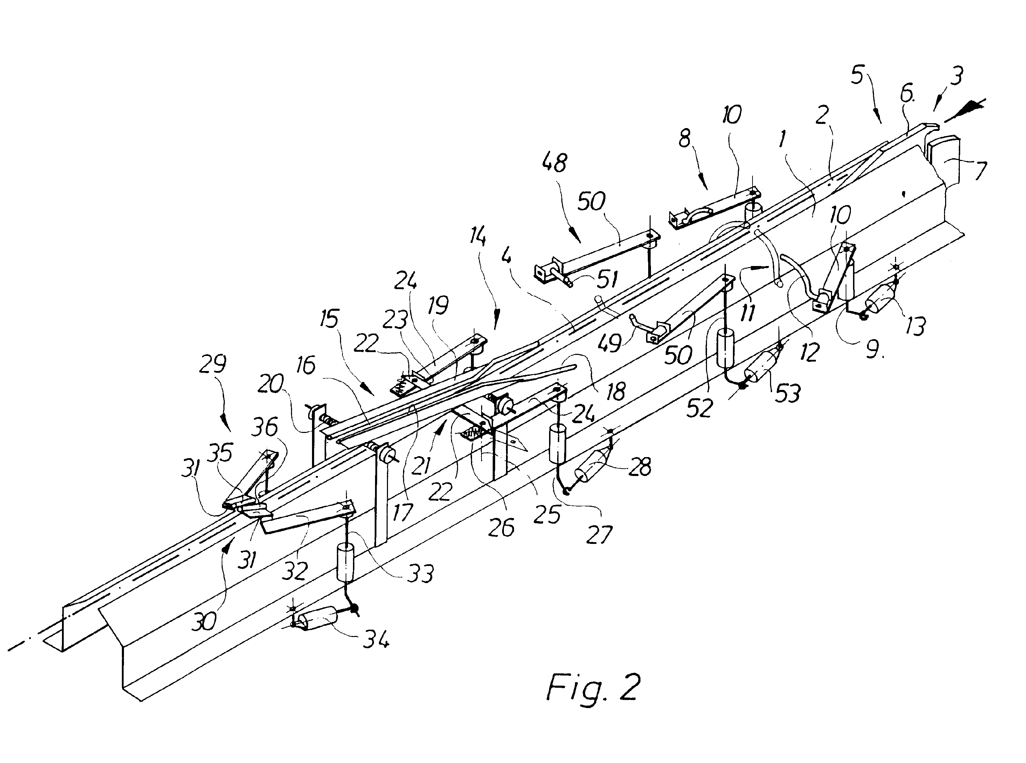

Zur Gewinnung der Außenfilets 66 als Doppelfilet zusammen mit den Innenfilets ist die beschriebene Vorrichtung gemäß Fig. 2 modifiziert. Danach bildet das dritte Werkzeug 29 den Abschluß der Werkzeugreihe und ist zwischen diesem und dem zweiten Werkzeug 14 ein Schabewerkzeug 48 eingeschoben, welches ein Paar Schabefinger 49 aufweist, deren jeder gegen eine nicht gezeigte Feder nach oben ausweichbar an dem freien Ende eines Hebels 50 angeordnet ist. Die Schabefinger 49 weisen hakenförmig aufragende Enden 51 auf, die in Förderrichtung geneigt eingespannt sind. Der Hebel 50 ist mit seinem anderen Ende an einer senkrechten Achse 52 befestigt, an der ein eine Drehung derselben bewirkender Antrieb in Form eines pneumatisch betriebenen Schwenkzylinders 53 angreift, der die Schabefinger 49 zwischen einer Stellung neben der Bahn der Geflügelkörper in eine dieselbe kreuzende elastisch zu schwenken vermag.

Die Wirkungsweise der vorbeschriebenen Vorrichtung ist folgende:

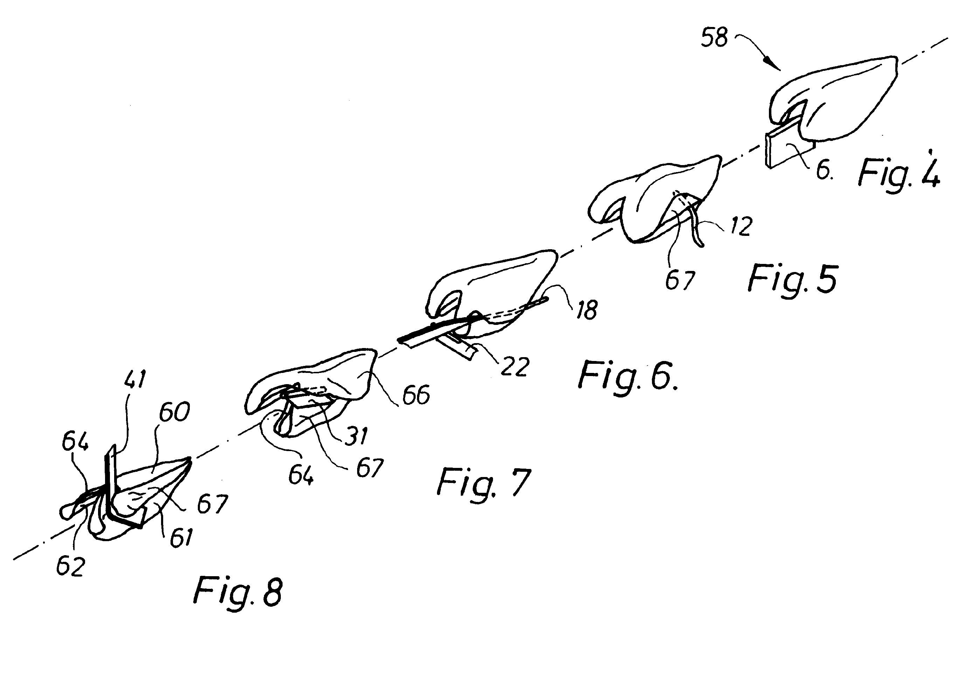

Ein gemäß Fig. 4 vorbereiteter, d. h. ein von den Extremitäten befreiter und als Brustkappe gehandelter Geflügelkörper 58 wird unmittelbar nach Durchgang einer Aufnahme 5 in dem Beschickbereich der Vorrichtung nach Fig. 1 mit dem Brustbein 59 nach oben und mit den Flügelgelenken 63 vorausweisend auf das Führungsprofil 1 aufgelegt, so daß die äußeren Teile der Innenseite der Brustbeinplatte 61 auf den dachförmigen Stützflächen des Führungsprofils 1 zur Auflage kommt. Die Brustkappe 58 wird dann gegen die fortlaufende Aufnahme 5 geschoben, so daß deren Sattelteil 6 mit seinem hornartig ausgebildeten Fortsatz zwischen den Ästen des Gabelbeins 64 auf den dem Kamm 60 des Brustbeins 59 vorgelagerten Teil der Brustbeinplatte 61 unter Übergreifen derselben aufläuft. Inzwischen hat sich die Aufnahme 5 dem Arbeitsbereich der Werkzeuge zum Trennen des Fleisches von dem Skelett genähert, so daß das Klemmteil 7 der Aufnahme 5 durch Auflaufen auf eine nicht gezeigte gestellfeste Kurvenschiene angehoben und damit die Brustkappe 58 eingeklemmt wird. Die auf diese Weise sicher gehaltene Brustkappe 58 gelangt nun in den Bereich des ersten Werkzeuges 8, welches die Aufgabe hat, die Außenfilets 66 von den Rabenbeinen 62, eventuell vorhandenen Rippen 65 sowie die Verbindungen zwischen den Außenfilets 66 und den Innenfilets 67 zu lösen. Dies geschieht durch Einsteuern der in Richtung aus der Bahn der Geflügelkörper 58 ausgeschwenkt gehaltenen Schaber 12 durch entsprechende Aktivierung der Schwenkzylinder 13, so daß die Schaber 12 unmittelbar hinter den Flügelgelenken 63 und zwischen Gabelbein 64 und Rabenbeinen 62 in das Fleisch eintauchen. Dieser Vorgang ist in Fig. 5 angedeutet dargestellt. Der richtige Zeitpunkt der Einsteuerung der Schaber 12 kann dabei durch Verstellen eines nicht gezeigten Schaltgliedes bestimmt werden, dessen Betätigung durch Vorbeigang der Aufnahme 5 erfolgt. Die Steuerung der folgenden Werkzeuge kann in gleicher Weise vorsichgehen. So bearbeitet gelangt die Brustkappe 58 in den Bereich des zweiten Werkzeuges 14, das zunächst mit den Führungselementen 15 bzw. mit deren Enden 18 in die geschaffene Trennfläche eindringt und dabei die Außenfilets 66 gemäß Fig. 6 aufsammelt. Aufgrund der Neigung der Führungselemente 15 und deren gegeneinander gerichtete Federung ergibt sich, daß die Außenfilets 66 unter einer gewissen Spannung nach oben gezogen werden, so daß deren Außenflächen zur gegenseitigen Anlage kommen. In diesem Spannungszustand wird das Wirkungsfeld des Trennwerkzeuges 21 erreicht, dessen Schälmesser 22 mit ihren ausgeschärften Schälkanten 23 zunächst die Verbindung zwischen den Außenfilets 66 und den Flügelgelenken 63 durchtrennen. Dieser Trennschnitt geht in einen Schälvorgang über, bei dem die Außenfilets 66 von dem Gabelbein 64 abgestreift werden, das sich während dieses Vorgangs durch seine Eigenspannung gegen die Unterseite der Schälkanten 23 drängt. Im Augenblick der Ankunft der Schälmesser 22 an dem Kamm 60 des Brustbeins 59 werden diese durch entsprechende Aktivierung der Schwenkzylinder 28 außer Eingriff gesteuert, so daß die Außenfilets 66 nunmehr lediglich noch an den Flanken des Kamms 60 des Brustbein 59 Verbindung mit dem Skelett haben. Diese Verbindung wird mittels der folgenden Rückhalteeinrichtung 30 getrennt, die mit ihren Klemmelementen 31 in die bisher erzeugte Trennfläche eintaucht und beide Außenfilets 66 in dem keilförmigen Klemmspalt 36 festhält, so daß diese unter Ausübung eines gewissen Schabeeffektes im Fortschritt der Förderung von den Flanken des Kamms 60 des Brustbeins 59 gelöst werden (sh. Fig. 7). Im Ergebnis liegt ein die beiden Außenfilets 66 umfassendes Doppelfilet vor, das durch kurzzeitiges Öffnen der Rückhalteeinrichtung 30 durch entsprechende Aktivierung der Schwenkzylinder 34 vor Ankunft der nächsten Aufnahme 5 freigegeben wird. Das nun weitgehend freigelegte, lediglich noch die Innenfilets 67 tragende Skelett gelangt anschließend in den Wirkbereich des Werkzeuges 37, dessen Reibelemente 39 durch Aktivierung des Antriebes 38 unter leichtem Andruck auf den Innenfilets 67 aufgesetzt werden. Aufgrund der durch die Förderung erzeugten Relativbewegung zwischen Reibelement 39 und Innenfilet 67 wird die dasselbe umgebende Haut zerstört, so daß das abschließende Abstreifen auch der Innenfilets 67 erleichtert wird. Das Abstreifen erfolgt mit Hilfe des Werkzeuges 40, dessen Schaber 41 durch entsprechende Aktivierung des Antriebes 44 unmittelbar nach Vorbeigang der Flügelgelenke 63 in die Bahn des Skelettes eingesteuert werden und, wie in Fig. 8 dargestellt, die Innenfilets 67 von dem Kamm 60 und der Brustbeinplatte 61 abschaben.

Die Gewinnung der Außenfilets 66 und der Innenfilets 67 in einem Stück ist durch Umrüsten der Vorrichtung in die Anordnung gemäß Fig. 2 möglich. Dabei werden die Schaber 12 des ersten Werkzeuges 8 etwas niedriger eingestellt und diesem folgend das Schabewerkzeug 48 installiert. Die Einsteuerung erfolgt unmittelbar nach Vorbeigang der Flügelgelenke 63, wodurch die Schabefinger 49 in die durch die Schaber 12 des ersten Werkzeuges 8 geschaffene Trennfläche eintauchen und die Innenfilets 67 und auch die Außenfilets 66 von den Flanken des Kamms 60 des Brustbeins 59 lösen. Es folgt in unveränderter Anordnung das Werkzeug 14, nach dessen Einwirkung mittels der ebenfalls unverändert belassenen Rückhalteeinrichtung 30 das Ge-

4

flügelfleisch in Form eines die Innenfilets 67 umfassenden Doppel-Außenfilets abgelöst wird.

Durch die Anordnung der Bearbeitungswerkzeuge in Zuordnung zu dem Untertrum des Förderers 3 ergibt sich die Möglichkeit einer Überkopf-Bearbeitung der Geflügelkörper, was durch Mitwirkung der Schwerkraft ein besseres Aufsammeln der jeweils gelösten Fleischteile und deren Führen sowie eine Vereinfachung der entsprechenden Elemente mit sich bringen kann.

## Patentansprüche

1. Verfahren zum maschinellen Gewinnen des aus Außenfilets und Innenfilets bestehenden Fleisches von den Körpern geschlachteten Geflügels, wobei die Körper von den Extremitäten befreit vorliegen und der Skelettkörper im wesentlichen das aus Kamm (crista sterni) und Brustbeinplatte (corpus sterni) bestehende Brustbein (sternum) und die von den Rabenbeinen (coracoidae) getragenen Flügelgelenke mit dem Gabelbein (clavicula), sowie eventuell mindestens Teile der Rippen enthält, und welche Körper mit den Flügelgelenken voraus und in Richtung ihrer Längsachse unter zu der Förderrichtung im wesentlichen paralleler Ausrichtung des der Körperhöhle zugewandten Teils der Brustbeinplatte (corpus sterni) an einer Reihe von Werkzeugen vorbeigeführt werden, mit dem folgenden Verfahrensschritten :

a) Lösen der Außenfilets (66) von den Rabenbeinen (62) und vorhandenen Rippen (65), sowie, Lösen der Verbindungen zwischen den Außenfilets (66) und den Innenfilets (67), bis im wesentlichen an den Kamm (crista sterni) (60) des Brustbeins (59) heran,

b) Durchtrennen der Verbindung zwischen den Außenfilets (66) und den Flügelgelenken (63) mit Ablösen der Außenfilets (66) von dem Gabelbein (64),

c) Abreißen der beiden Außenfilets (66) von dem Kamm (60) des Brustbeins (59) in einem Stück,

d) Aufreißen der die Innenfilets (67) umgebenden Haut, und

e) Abstreifen der Innenfilets (67) von dem Skelett.

2. Verfahren nach Anspruch 1 , bei dem das Fleisch in einstückiger Form als Doppelfilet mit den Innenfilets gewonnen wird, **gekennzeichnet durch** einen modifizierten Verfahrenschritt a) , bei dem das Lösen des Fleisches auf die Außenfilets (66) und die Innenfilets (67) bezogen ist, vor der Durchführung des Verfahrensschrittes b) das Fleisch von den Flanken des Kamms (60) des Brustbeins (59) gelöst wird und dann der Verfahrensschritt c) folgt, bei dem die Innenfilets (67) mit erfaßt werden.

3. Vorrichtung zur Durchführung der Verfahren nach den Anspruch 1 oder 2 mit einem mit Aufnahmen (5) für die Halterung der zu bearbeitenden Geflügelkörper (58) versehenen, kontinuierlich bewegten Förderer (3) sowie längs der Bahn des Förderers (3) angeordneten Werkzeugen zum Lösen des Fleisches von dem Skelettkörper, wobei des Werkzeug zur Ausführung des Verfahrensschrittes a) als Schabewerkzeug (8) aus mindestens einem Paar Schaber (12) ausgebildet ist, die symmetrisch auf gegenüberliegenden Seiten der Bahn der Geflügelkörper (58) und in diese einsteuerbar angeordnet sind, wobei die Einsteuerung unmittelbar hinter dem Flügelgelenken (63) und jeweils zwischen Gabelbein (64) und Rabenbein (62) erfolgt, **dadurch gekennzeichnet**, daß jeder Schaber (12) aus einem der äußeren Querschnittskontur des dam jeweiligen Schaber (12) jeweils zugeordneten Arbeitsfeldes des Skelettkörpers angepaßten Schabefinger besteht, der gegen Federkraft nach oben und außen verdrängbar gehaltert im Verhältnis zu der Bahn (3) der Geflügekörper (58) höhenverstellbar ausgeführt ist.

4. Vorrichtung nach den Anspruch 3, **dadurch gekennzeichnet,** daß das Werkzeug zur Ausführung des Verfahrensschnittes b) ein Paar die durch den Verfahrensschritt a) abgelösten Filettteile aufsammelnder, symmetrisch zu beiden Seiten der Bahn der Geflügelkörper ansteigend angeordneter Führungselemente (15) umfaßt, welche gegen Federkraft nach außen verdrängbar gehaltert sind sowie ein Trennwerkzeug (21) mit einem Paar in dem Bereich der Führungselemente (15) und unmittelbar unterhalb derselben angeordneter Schälmesser (22) aufweist , die aus einer die Bahn der Geflügelkörper (58) kreuzenden Stellung im Augenblick der Ankunft des Kamms (60) des Brustbeins (59) nach außen steuerbar eingerichtet sind.

5. Vorrichtung nach Anspruch 3 ,**dadurch gekennzeichnet,** daß das Werkzeug zum Lösen des Fleisches von den Flanken des Kamms (60) des Brustbeins (59) als in die Freischabung aus dem Verfahrensschritt a) einsteuerbares Schabewerkzeug (48) mit einem Paar mit hakenförmig aufragenden Enden versehener Schabefinger 49) ausgebildet ist, die gegen Federkraft vertikal und nach außen ausweichbar angeordnet sind.

6. Vorrichtung nach Anspruch 3, **dadurch gekennzeichnet,** daß das Werkzeug zur Ausführung des Verfahrensschrittes c) eine symmetrisch zu und über der Bahn der Geflügelkörper (58) angeordnete Rückhalteeinrichtung (30) aus einem Paar, die gelösten Filetteile um den Gratbereich des Kamms (60) des Brustbeins (59) nach oben klappender, einen sich verjüngenden Klemmspalt (36) zwischen sich bildender Klemmelemente (31) umfaßt, die nach Vorbeigang des Geflügelkörpers (58) aus deren Bahn aussteuerbar ausgebildet sind.

7. Vorrichtung nach Anspruch 3, **dadurch gekennzeichnet,** daß sie zur Ausführung des Verfahrensschrittes d) ein Werkzeug (37) aus einem Paar symmetrisch neben der Bahn der Geflügelkörper (58) angeordneter Reibelemente (39) umfaßt, welche im Augenblick des Eintritts eines Geflügelkörpers (58) in deren Bereich unter definiertem Andruck auf die Innenfilets (67) absenkbar ausgestaltet sind.

8. Vorrichtung nach Anspruch 3 , **dadurch gekennzeichnet,** daß sie zur Ausführung des Verfahrensschrittes e) ein Paar symmetrisch zu der Bahn der Geflügelkörper (58) angeordneter Schaber (41) umfaßt, deren Schabekanten (42) der Querschnittskontur des Skelettes des Geflügelkörpers (58) im Bereich des Kamms (60) des Brustbeins (59) und der Brustbeinplatte (61) angepaßt und unmittelbar nach Vorbeigang der Flügelgelenke (63) in die Bahn der Geflügelkörper (58) unter federnder Ausweichbarkeit nach außen einsteuerbar ausgebildet sind.

9. Vorrichtung nach einem der Ansprüche 3 bis 8, **dadurch gekennzeichnet,** daß mindestens das Trennwerkzeug (21) sowie die diesem nachgeordneten Werkzeuge längs des Untertrums des Förderers (3) angeordnet sind.

## Claims

1. Method for the mechanical gaining of the meat consisting of outer fillets and inner fillets from the carcasses of slaughtered poultry, wherein the carcasses are presently freed of the extremities and the skeleton body contains substantially the breastbone (sternum) consisting of comb (crista sterni) and breastbone plate (corpus sterni) and the wing joints, which are carried by the cartilage bones (coracoidae), with the fork bone (clavicula) as well as possibly at least a part of the ribs and wherein the carcasses are guided past a series of tools with the wing joints forward and in direction of their longitudinal axis with an orientation of that part of the breastbone plate (corpus sterni), which faces the body cavity, substantially parallel to the conveying direction, with the following method steps:

a) detaching of the outer fillets (66) from the cartilage bones (62) and ribs (65) that are present as well as undoing the connections between the outer fillets (66) and the inner fillets (67) substantially to the comb (crista sterni) (60) of the breastbone (59),

b) severing the connection between the outer fillets (66) and the wing joints (63) with detaching of the outer fillets (66) from the fork bone (64),

c) tearing both the outer fillets (66) off from the comb (60) of the breastbone (59) in one piece,

d) tearing open the skin surrounding the inner fillets (67) and

e) stripping the inner fillets (67) off from the skeleton.

2. Method according to claim 1, in which the meat is gained in one-piece form as double fillet with the inner fillets, characterised by a modified method step (a), in which the detaching of the meat is related to the outer fillets (66) and the inner fillets (67), the meat is detached from the flanks of the comb (60) of the breastbone (59) before the performance of the method step (b) and the method step (c) then follows, in which the inner fillets (67) are also comprehended.

3. Device for the performance of the method according to claim 1 or 2, with a continuously moved conveyor (3) provided with receptacles (5) for the retention of the poultry carcasses (58) to be treated as well as with tools, which are arranged along the path of the conveyor (3), for the detaching of the meat from the skeleton body, wherein the tool for the performance of the method step (a) is constructed as scraping tool (8) out of at least one pair of scrapers (12), which are arranged symmetrically on opposite sides of the path of the poultry carcasses (58) to be drivable into this path, wherein the driving-in takes place directly behind the wing joints (63) and each time between the fork bone (64) and the cartilage bone (62), characterised thereby, that each scraper (12) consists of a scraping finger which is matched to the outer cross-sectional outline of that operating field of the skeleton body, which is associated each time with the respective scraper (12), and which is mounted to be displaceable upwardly and outwardly against spring force and constructed to be adjustable in height in relation to the path (3) of the poultry carcasses (58).

4. Device according to claim 3, characterised thereby, that the tool for the performance of the method step (b) comprises a pair of guide elements (15), which are arranged to be rising symmetrically at both sides of the path of the poultry carcasses (58), collect up the fillet parts detached by the method step (a) and which are mounted to be displaceable outwardly against spring force as well as a severing tool (21) with a pair of peeling knives (22), which are arranged in the region of the guide elements (15) and directly underneath the same and which are arranged to be drivable outwardly out of a setting, which intersects the path of the poultry carcasses (58), at the instant of arrival of the comb (60) of the breastbone (59).

5. Device according to claim 3, characterised thereby, that the tool for detaching the meat from the flanks of the comb (60) of the breastbone (59) is constructed as a scraping tool (48), which is drivable into the portion scraped free in the method step (a), with a pair of scraping fingers (49), which are provided with ends projecting up in hook shape and arranged to be capable of deviating vertically and outwardly against spring force.

6. Device according to claim 3, characterised thereby, that the tool for the performance of the method step (c) comprises a holding-back equipment (30), which is arranged symmetrically to and above the path of the poultry carcasses (58), of a pair of clamping elements (31), which form a tapering clamping gap (36) between them, tilt the detached fillet parts upwardly about the bone region of the comb (60) of the breastbone (59) and which are constructed to be drivable out of the path of the poultry carcass (58) after the passage thereof.

7. Device according to claim 3, characterised thereby, that it comprises a tool (37) of a pair of friction elements (39), which are arranged symmetrically beside the path of the poultry carcasses (58) and which are structured to be lowerable onto the inner fillets (67) with defined contact pressure in the instant of the entry of a poultry carcass (58) into their range, for the performance of the method step (d).

8. Device according to claim 3, characterised thereby, that it comprises a pair of scrapers (41), which are arranged symmetrically to the path of the poultry carcasses (58) and the scraping edges (42) of which are matched to the cross-sectional outline of the skeleton of the poultry carcass (58) in the region of the comb (60) of the breastbone (59) and of the breastbone plate (61) and which are constructed to be drivable into the path of the poultry carcasses (58), whilst being capable of resiliently deviating outwardly, immediately after the passage of the wing joints (63), for the performance of the method step (e).

9. Device according to one of the claims 3 to 8, characterised thereby, that at least the severing tool (21) as well as the tools arranged downstream thereof are arranged along the lower run of the conveyor (3).

**Revendications**

1. Procédé destiné à obtenir, par traitement à la machine, la chair constituée du filet extérieur et du filet intérieur, des corps de volailles abattues, les corps étant libérés de leurs extrémités et l'ossature comprenant essentiellement le sternum, formé du bréchet (crista sterni) et du corps de sternum (corpus sterni), et les articulations d'ailes portées par les articulations claviculaires (coracoidae) avec la clavicule (clavicula) ainsi qu'éventuellement au moins des parties des côtes, et les corps étant amenés à une suite d'outils, les articulations d'ailes en avant et dans la direction de leur axe longitudinal l'orientation de la partie du corps de sternum (corpus sterni) tournée vers le creux du corps étant sensiblement parallèle à la direction d'avance, comprenant les étapes de procédé consistant a :
a) détacher des articulations claviculaires (62) et des côtes présentes (65) les filets extérieurs (66) et détacher les liaisons entre les filets extérieurs (66) et les filets intérieurs (67), sensiblement jusqu'au bréchet (60) (crista sterni) du sternum (59),
b) couper la liaison entre les filets extérieurs (66) et les articulations d'ailes (63), en détachant de la fourchette (64) les filets extérieurs (66),
c) arracher du bréchet (60) du sternum (54), en une seule pièce, les deux filets extérieurs (66),
d) arracher la peau entourant les filets intérieurs (67), et
e) enlever du squelette les filets intérieurs (67).

2. Procédé selon la revendication 1, dans lequel la chair est obtenue d'un seul tenant sous forme de filet double comprenant les filets intérieurs, **caractérisé par** une étape de procédé a) modifiée, à laquelle se rapporte le fait de détacher la chair sur les filets extérieurs (66) et les filets intérieurs (67), la chair est détachée des flancs du bréchet (60) du sternum (59) avant l'exécution de l'étape b) du procédé, et l'étape c) du procédé, au cours de laquelle les filets intérieurs (67) sont simultanément saisis suit la précédente.

3. Dispositif de mise en oeuvre des procédés selon la revendication 1 ou 2 comportant un dispositif de transport (3) déplacé en continu, pourvu d'évidements (5) pour tenir les corps de volailles (52) à traiter, ainsi que des outils, disposés le long de la bande transporteuse du dispositif de transport (3) pour séparer la chair de l'ossature, l'outil destiné à la mise en oeuvre de l'étape a) du procédé étant réalisé sous la forme d'un outil de raclage (8) comportant au moins une paire de racloirs (12) qui sont disposés de façon symétrique sur des côtés opposés de la bande transporteuse des corps de volaille (58) et peuvent être introduits dans cette bande transporteuse, l'introduction s'effectuant immédiatement au-dessous des articulations d'ailes (63) et respectivement entre le sternum (64) et les articulations claviculaires (62), **caractérisé en ce que** chaque racloir (12) se compose d'un doigt de racloir qui est adapté au contour extérieur en coupe transversale du domaine de travail de l'ossature respectivement associé à ce racloir (12) et qui est réalisé réglable en hauteur, par rapport à la bande transporteuse (3) des corps de volailles (58), en étant tenu de façon à pouvoir être écarté vers le haut et l'extérieur en opposition à une force élastique.

4. Dispositif selon la revendication 3, **caractérisé en ce que** l'outil destiné à la mise en oeuvre de l'étape b) du procédé comprend une paire d'éléments de guidage (15), disposés symétriquement sur les deux côtés de la bande transporteuse des corps de volailles en montant, qui collectent les éléments de filets séparés au cours de l'étape a) du procédé et qui sont maintenus en pouvant être écartés vers l'extérieur en opposition à une force élastique, et comprend aussi un outil de séparation (21) comprenant une paire de couteaux à décortiquer (22), disposés dans la zone des éléments de guidage (15) et immédiatement au-dessous de ceux-ci, qui sont installés de manière à pouvoir être déplacés vers l'extérieur, à partir d'une position croisant la bande transporteuse des corps de volailles (58), à l'instant de l'arrivée du bréchet (60) du sternum (59).

5. Dispositif selon la revendication 3, **caractérisé en ce que** l'outil destiné à séparer la chair des flancs du bréchet (60) du sternum (59), est réalisé en tant qu'outil de raclage (48) qui peut être introduit dans le raclage provenant de l'étape du procédé a), comportant une paire de doigts de raclage (49), pourvus d'extrémités en saillie en forme de crochets, qui sont disposés de manière à pouvoir s'écarter verticalement et vers l'extérieur en opposition à une force élastique.

6. Dispositif selon la revendication 3, **caractérisé en ce** que l'outil destiné à la mise en oeuvre de l'étape c) du procédé comprend un dispositif de retenue (30) disposé symétriquement par rapport à la bande transporteuse des corps de volaille (58) et au-dessus d'elle, formé d'une paire d'éléments de serrage (31) rabattant vers le haut les éléments de filets séparés autour de la zone de l'arête du bréchet (60) du sternum (59), réalisant entre eux une fente de serrage (36) qui se rétrécit, qui sont réalisés pour pouvoir être ressortis de la bande transporteuse des corps de volaille (58) après le passage de ceux-ci.

7. Dispositif selon la revendication 3, **caractérisé en ce** qu'il comprend, pour la mise en oeuvre de l'étape d) du procédé, un outil (37) comportant une paire d'éléments de friction (39) disposés de façon symétrique à côté de la bande transporteuse des corps de volailles (58), qui sont réalisés de façon à pouvoir, à l'instant de l'entrée d'un corps de volaille (58) dans leur zone, s'effacer par abaissement sous une pression définie sur les filets intérieurs (67).

8. Dispositif selon la revendication 3, **caractérisé en ce** qu'il comprend, pour la mise en oeuvre de l'étape e) du procédé, une paire de racloirs (41), disposés de façon symétrique par rapport à la bande transporteuse des corps de volailles (58), dont les arêtes de raclage (42) sont adaptées en contour en coupe transversale du squelette du corps de volaille (58) dans la zone du bréchet (60) du sternum (59) et du corps de sternum (61), et qui sont réalisés de façon à pouvoir être introduits vers l'extérieur, immédiatement après le passage des articulations d'ailes (63), dans la bande transporteuse des corps de volailles (58) en pouvant s'écarter de façon élastique.

9. Dispositif selon l'une des revendications 3 à 8, **caractérisé en ce** qu'au moins l'outil de séparation (21) ainsi que les outils disposés en aval de celui-ci sont disposés le long du brin inférieur du dispositif de transport (3).

Fig. 1

Fig. 2

Fig. 3

Fig. 4

Fig. 5

Fig. 6.

Fig. 7

Fig. 8